# EUROPÄISCHE PATENTANMELDUNG

(11) **EP 3 324 351 A1**
(43) Veröffentlichungstag der Anmeldung: **23.05.2018**
(21) Anmeldenummer: 17401118.9
(22) Anmeldetag: 17.11.2017
(51) Int. Cl.: G06Q 10/08

(54) **ANORDNUNG ZUM UNTERSTÜTZEN VON EINKÄUFEN SOWIE ERFASSUNGSGERÄT**

(30) Priorität: 18.11.2016 DE 102016122255
(71) Anmelder: TechniSat Dresden GmbH, 01139 Dresden (DE); TechniSat Digital GmbH, 54550 Daun (DE)
(72) Erfinder: Baer, Hans-Joachim, 01109 Dresden (DE); Prüm, Marc Anthony, 54550 Daun (DE); Listner, Andreas, 54550 Daun (DE); Frenzel, Sandro, 01156 Dresden (DE)

(57) **Zusammenfassung**

Die Erfindung betrifft eine Anordnung zum Unterstützen von Einkäufen sowie ein Erfassungsgerät. Die Anordnung (1) zum Unterstützen von Einkäufen aufweisend ein Bedienelement (11) zum Erfassen von Bedienhandlungen, ein Ausgabeelement (10) zum Ausgeben von Bild, ein Erfassungselement (9) zum Erfassen (12) mindestens einer ersten Information (22) zu mindestens einem zu kaufenden Gegenstand (2), ein Verarbeitungselement (21) zum Verarbeiten der mindestens einen ersten Information (22) und zum Bereitstellen von ersten Daten zu der ersten Information (22) des mindestens einen zu kaufenden Gegenstandes (2) in einer ersten Liste (23), wobei mit dem Verarbeitungselement (21) das Bedienelement (11), das Ausgabeelement (10) und das Erfassungselement (9) gekoppelt sind, wobei die ersten Daten in der ersten Liste (23) eine Bezeichnung (14) des Gegenstandes (2) aufweisen und mit einer zu kaufenden Menge oder Stückzahl des Gegenstandes (2) verknüpft sind, wobei die Anordnung (1) zum Kaufen des mindestens einen Gegenstandes (2) ferner ein Übertragungselement (26) und/oder ein Bestellelement (25) aufweist, wobei das Übertragungselement (26) eingerichtet ist zum Koppeln mit einem zusätzlichen Gerät (17) und zum Übertragen der ersten Liste (23) oder einer zusätzlichen Liste (28), die ersten Daten aufweist, an das zusätzliche Gerät (27), wobei das Bestellelement (15) eingerichtet ist zum Koppeln mit dem Internet (30) und eingerichtet ist, den mindestens einen Kauf mit einer Bestellung bei mindestens einem Verkäufer im Internet (30) automatisch durchzuführen mittels der ersten Liste (23);

## Beschreibung

Die Erfindung betrifft eine Anordnung zum Unterstützen von Einkäufen sowie ein Erfassungsgerät. Gezeigt wird eine technische Lösung, mit der sich Einkäufe insbesondere von Waren des täglichen Bedarfes vereinfachen lassen. Die Lösung kann beispielsweise in eine Empfangseinrichtung wie ein TV-Gerät oder eine sog. STB (engl. set-top-box) integriert sein. Eine derartige Empfangseinrichtung ist in nahezu jedem Haushalt vorhanden. Ferner ist optional eine Integration in eine Haussteuerung (engl. SmartHome) vorgesehen.

Die Lösung befasst sich mit dem Nachteil, dass bei ganz alltäglichen Einkäufen viele Dinge manuell erledigt werden und erledigt werden müssen, wovon sich aber ein signifikanter Teil möglicherweise mit einer technischen Lösung vereinfachen lässt. Die Rede ist von der Erfassung der Gegenstände, die einzukaufen sind. Der herkömmliche auf Papier geschriebene Einkaufszettel ist nach wie vor üblich. Zwischenzeitlich gibt es verschiedene angrenzende Möglichkeiten, die auf elektronischen Mitteln (mobile Geräte, Internet/WLAN) basieren.

Unabhängig davon, ob der Einkaufzettel von herkömmlicher oder von elektronischer Gestalt ist, ist beim Befüllen des selbigen der Einkäufer gefragt und dessen Konzentration sowie dessen Informationsstand. So kann es vorkommen, dass einzukaufende Gegenstände schlichtweg vergessen werden. Ferner kann es sein, dass die falsche Ware gekauft wurde oder selbige in der Menge zu viel oder zu wenig. Eine mögliche Ursache für die aufgezeigten Probleme könnte sein, dass die Angebotsvielfalt gewachsen ist und damit die Vielfalt der Gegenstände oder Waren die insgesamt gekauft werden. Der Vorrat oder Bestand an Waren des täglichen Bedarfs im Haushalten wird in den meisten Fällen durch eine einzelne Person betreut und die Kontrolle des Vorrates erfolgt durch Sichtprüfung. Es ist demnach nicht ausgeschlossen, dass die einzelne Person an Grenzen gerät. Für die erwähnten elektronischen Hilfsmittel sowie für den sich möglicherweise im Haushalt befindende Computer sind keine praktikablen Lösungen bekannt, die das Befüllen eines Einkaufzettels signifikant erleichtern.

Ein Aspekt bei der vorgestellten Lösung ist die mögliche Integration in ein elektrisches Gerät, das eine Datenverarbeitungseinheit aufweist. Die Datenverarbeitungseinheit kann als eine Schaltungsanordnung mit Prozessor (CPU), Speicher (RAM) usw. verstanden werden, wobei die Datenverarbeitungseinheit eingerichtet ist, ein Betriebssystem zu betreiben sowie eine auf das Betriebssystem abgestimmte Software. Insofern kommt als elektrisches Gerät jede Form eines Computers oder eines mobilen Gerätes in Frage, ein Internet-Router oder dergleichen sowie auch eine Empfangseinrichtung. Die Datenverarbeitungseinheit ist zur Verwendung eines (Computer-)Netzwerkes eingerichtet. D.h., dass die Empfangseinrichtung für eine LAN/WAN-Verbindung ausgebildet ist und ggf. drahtlose Verbindungen betreiben kann.

Eine Empfangseinrichtung ist zum Empfangen von Medieninhalten und insbesondere von linearen Medieninhalten ausgebildet. Bei einer Empfangseinrichtung kann es sich beispielsweise um ein TV-Gerät oder um ein an einen Flachbildschirm angeschlossenes externes Gerät (STB) handeln, das für den Rundfunk und zur Ausgabe/Wiedergabe von Bild (inklusive Ton) insofern ausgebildet ist, dass ein dafür vorgesehene Signal (zum Beispiel HDMI) von dem Gerät bereitgestellt werden kann.

Bei dem besagten Gerät kann es sich auch um eine Komponente einer Haussteuerung (engl. SmartHome) handeln. In einer Haussteuerung fungiert ein Gerät als Zentrale, mit der zum Teil mehrere Teilnehmer der Haussteuerung gekoppelt sind. Die Kopplung kann mittels Draht oder ohne (drahtlos) realisiert sein. Es kommt in Betracht, dass ein elektrisches Gerät (z.B.: Computer, TV/STB, Router) als Zentrale fungiert, die mittels der Datenverarbeitungseinheit betrieben wird.

Es sind im Zusammenhang mit einer Haussteuerung eine Reihe diverser Teilnehmer bekannt, die unterschiedliche Funktionen von Detektoren und/oder Sensoren aufweisen. Mit diesen Funktionen lassen sich Zustände wie Licht, Temperatur, Wind, Bewegung usw. detektieren. Ferner kann ein Teilnehmer als Aktor fungieren und beispielweise einen Schalter in einer Steckdose betätigen.

Es kommt bei einem Teilnehmer auf eine Flexibilität bei der Ortswahl an. Die drahtlose Kommunikation bietet diese Möglichkeit. Diese kann für kurze Distanzen ausgebildet sein (engl. NFC = "near field communikation"). Es sind Lösungen bekannt, die mittels WLAN (IEEE 802.11) kommunizieren. Andere nutzen DECT oder ITU-T G.9959. Mittels der Kommunikation lässt sich der Teilnehmer mit der Zentrale koppeln. In der Zentrale fließen die Informationen oder Daten zusammen, die die Teilnehmer bereitstellen. In der Zentrale lassen sich verschiedene Auswertungen vornehmen und Szenarien anlegen, mittels derer Aktoren betätigt werden könne z.B. für das Betätigen von Rollläden, Verschattungen, Berieselungen, Beleuchtungen, Heizungen usw.

Bei der vorgestellten Lösung geht es um das Unterstützen von Einkäufen mit technischen Mitteln in dem aufgezeigten Rahmen.

Hierfür wird eine Anordnung gemäß Anspruch 1 vorgeschlagen sowie ein Erfassungsgerät gemäß Anspruch 18. In den abhängigen Ansprüchen sind Ausführungsformen der aufgezeigten Ausgestaltungen dargestellt.

Gemäß einer ersten Ausgestaltung ist eine Anordnung zum Unterstützen von Einkäufen vorgesehen. Die Anordnung weist auf: ein Bedienelement zum Erfassen von Bedienhandlungen, ein Ausgabeelement zum Ausgeben von Bild und ein Erfassungselement zum Erfassen mindestens einer ersten Information zu mindestens einem zu kaufenden Gegenstand. Ferner weist die Anordnung auf: ein Verarbeitungselement zum Verarbeiten der mindestens einen ersten Information und zum Bereitstellen von ersten Daten zu der ersten Information des mindestens einen zu kaufenden Gegenstandes in einer ersten Liste. Mit dem Verarbeitungselement sind das Bedienelement, das Anzeigeelement und das Erfassungselement gekoppelt. Die ersten Daten in der ersten Liste weisen eine Bezeichnung des Gegenstandes auf und sind mit einer zu kaufenden Menge oder Stückzahl des Gegenstandes verknüpft.

Die Anordnung weist ferner ein Übertragungselement und/oder ein Bestellelement auf zum Kaufen des mindestens einen Gegenstandes. Das Übertragungselement ist eingerichtet zum Koppeln mit einem zusätzlichen Gerät und zum Übertragen der ersten Liste oder einer zusätzlichen Liste, die ersten Daten aufweist, an das zusätzliche Gerät. Das Bestellelement ist eingerichtet zum Koppeln mit dem Internet und ist eingerichtet, den mindestens einen Kauf mit einer Bestellung bei mindestens einem Verkäufer im Internet automatisch durchzuführen mittels der ersten Liste.

Gemäß einer Ausführungsform der Anordnung ist das Verarbeitungselement mittels einer Datenverarbeitungseinheit einer Empfangseinrichtung eingerichtet, wobei die Empfangseinrichtung zum Empfangen von linearen Medieninhalten, zum Ausgeben von Bild und Ton sowie zum Bedienen mit einer Fernbedienung eingerichtet ist.

Gemäß einer Ausführungsform der Anordnung ist die erste Information ein Bild des Gegenstandes oder ein Bild von dessen Verpackung oder die erste Information ist ein Bild, eine maschinenlesbare Information oder ein Bild von der maschinenlesbaren Information, die die Verpackung des Gegenstandes aufweist, wie beispielsweise ein Barcode, ein Schriftzug, eine Marke, ein Preis und/oder eine Artikelnummer. Das Erfassungselement ist eingerichtet, den Barcode zu erkennen und eine adäquate erste Information als Datenpaket zu erzeugen, und/oder das Erfassungselement ist eingerichtet, die erste Information als digitale Bilddaten mittels einer Kamera zu erzeugen.

Gemäß einer Ausführungsform der Anordnung ist das Erfassungselement in einem handlichen Erfassungsgerät eingerichtet, wobei das Bedienelement und das Ausgabeelement entweder die der Empfangseinrichtung sind, nämlich Fernbedienung und Bildschirm, oder das Bedienelement und das Ausgabeelement zusammen mit dem Erfassungselement in dem Erfassungsgerät eingerichtet sind.

Gemäß einer Ausführungsform der Anordnung ist zum Koppeln des Erfassungselementes mit dem Verarbeitungselement eine drahtgebundene oder drahtlose Verbindung eingerichtet, insbesondere zwischen dem Erfassungsgerät und der Empfangseinrichtung.

Gemäß einer Ausführungsform der Anordnung ist das Verarbeitungselement oder die Empfangseinrichtung eingerichtet, als Zentrale eine Haussteuerung zu fungieren, wobei eingerichtet ist, dass das Erfassungselement und/oder das Erfassungsgerät als Teilnehmer der Haussteuerung fungieren.

Gemäß einer Ausführungsform der Anordnung ist das Verarbeitungselement eingerichtet, erste Daten bereitzustellen, die den Gegenstand bezeichnen und/oder beschreiben, und zweite Daten bereitzustellen mit Inhalten, die für den automatischen Kauf des Gegenstandes obligatorisch sind, wobei zweite Daten des Gegenstandes mit ersten Daten des Gegenstandes verknüpft sind.

Gemäß einer Ausführungsform der Anordnung ist das Verarbeitungselement zum Erkennen des Gegenstandes eingerichtet, mittels einer ersten Schnittstelle die ersten Daten bereitzustellen, wobei die erste Schnittstelle eingerichtet ist, zu der mindestens einen ersten Information die ersten Daten des Gegenstandes bereitzustellen.

Gemäß einer Ausführungsform der Anordnung ist die erste Schnittstelle eingerichtet, zu der mindestens einen ersten Information die ersten Daten und die zweiten Daten des Gegenstandes bereitzustellen.

Gemäß einer Ausführungsform der Anordnung ist das Bestellelement eingerichtet, den Kauf durchzuführen mittels der ersten Daten und der zweiten Daten des Gegenstandes.

Gemäß einer Ausführungsform der Anordnung sind eine zweite Schnittstelle und/oder mindestens eine Liste eingerichtet, zweite Daten zu dem Gegenstand oder zu mindestens einen anderen Gegenstand bereitzustellen.

Gemäß einer Ausführungsform der Anordnung ist das Verarbeitungselement zum Auswählen des Gegenstandes und zum Auswählen mindestens eines anderen Gegenstandes eingerichtet, wobei das Auswählen eingerichtet ist, die jeweiligen zweiten Daten in die erste Liste zu übernehmen.

Gemäß einer Ausführungsform der Anordnung ist das Bestellelement eingerichtet, den jeweiligen Gegenstand mittels einer dritten Schnittstelle im Internet zu kaufen.

Gemäß einer Ausführungsform der Anordnung ist das Verarbeitungselement eingerichtet, die ersten Daten aus einer mittels der Empfangseinrichtung und/oder des Verarbeitungselementes bereitgestellten Liste in die erste Liste zu übernehmen.

Gemäß einer Ausführungsform der Anordnung ist das Verarbeitungselement eingerichtet, die ersten und die zweiten Daten aus einer der bereitgestellten Listen in die erste Liste zu übernehmen.

Gemäß einer Ausführungsform der Anordnung ist die Anordnung derart eingerichtet ist, dass mindestens eine der Schnittstellen, nämlich die erste Schnittstelle, die zweite Schnittstelle, die dritte Schnittstelle und/oder eine vierte Schnittstelle im Internet eine zentrale Gegenstelle aufweist.

Gemäß einer Ausführungsform der Anordnung ist die Gegenstelle mindestens einer der Schnittstellen, nämlich die der ersten Schnittstelle, der zweiten Schnittstelle, der dritten Schnittstelle und/oder der vierten Schnittstelle eingerichtet, unterschiedliche Internetseiten zu verwenden insbesondere zum Kaufen/Bestellen mittels der dritten Schnittstelle.

Gemäß einer weiteren Ausgestaltung ist ein Erfassungsgerät ausgebildet zum Verwenden in der vorhergehend beschriebenen Anordnung.

Nachfolgend wird die Erfindung anhand von Ausführungsbeispielen und zugehörigen Zeichnungen erläutert. Hierzu zeigen:
- Fig. 1: Erfassungsgerät - räumliche Sicht
- Fig. 2: Erfassungsgerät mit eckige Tasten - Draufsicht
- Fig. 3: Erfassungsgerät mit Ringtaster - Draufsicht
- Fig. 4: Anordnung und zu kaufender Gegenstand
- Fig. 5: Erfassungsgerät - Erfassen des zu kaufenden Gegenstandes
- Fig. 6: Anordnung - Blockdarstellung

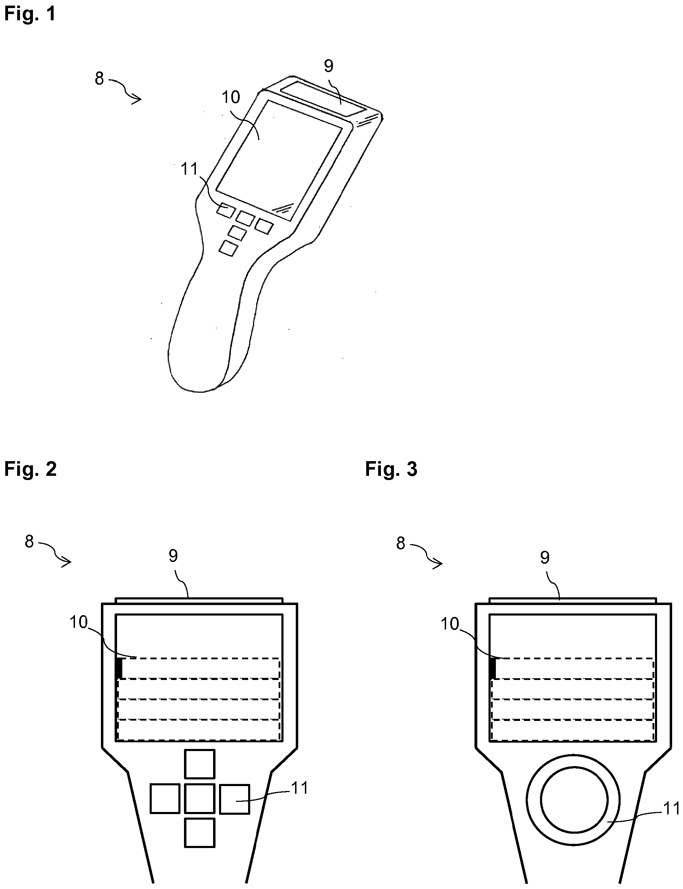

In der **Fig. 1** ist beispielhaft ein handliches Erfassungsgerät 8 gezeigt. Das Erfassungsgerät 8 weist ein Erfassungselement 9, ein Ausgabeelement 10, sowie ein Bedienelement 11 mit vier Tasten auf. Das Erfassungsgerät 8 ist dafür vorgesehen, dass es ein Bediener in der Hand hält und mittels des Erfassungselementes 9 einen Gegenstand 2 derart erfasst, dass eine optische Bildinformation von dem Gegenstand aufgenommen wird. In der konkreten Ausgestaltung kann es sich bei dem Erfassungselement um einen sogenannten Barcodescanner handeln oder um eine Digitalkamera oder dergleichen. In einer einfachen Variante weist das Erfassungsgerät 8 lediglich das Erfassungselement 9 auf.

In den **Fig. 2 und 3** sind mögliche Ausführungsformen des Erfassungsgerätes 8 in zwei Varianten in einer Draufsicht gezeigt. Diese zwei unterscheiden sich in der Ausgestaltung des Bedienelementes 11. Die erste Variante sieht ein Bedienelement 11 mit eckigen asten vor und die zweite Variante ein ringförmiges Tastenelement, wobei unter dem Ring vier Taster für vier Richtungen vorgesehen sind sowie in der Mitte eine kreisförmige weitere Taste.

Die ansonsten identische Ausgestaltung der Erfassungsgerät 8 sieht das Erfassungselement 9, das Ausgabeelement 10 sowie das Bedienelement 11 vor. Innerhalb des Ausgabeelementes 10 sind mit Strichlinien Zeilen angedeutet. Damit wird gezeigt, dass in dem Ausgabeelement 10 beispielsweise eine Listendarstellung möglich ist. Ein schwarzes Viereck in einer der Zeilen soll zeigen, dass eine der Zeilen markiert ist. Es kann vorgesehen sein, mittels des Bedienelementes 11 die Markierungen zu bewegen. Ferner ist angedacht, dass mittels des Bedienelementes 11 eine Zeile ausgewählt wird und dass weitere Möglichkeiten der Bedienung zu der ausgewählten Zeile zur Verfügung gestellt werden zum Unterstützen des Bedieners; beispielsweise das Ändern der Stückzahl oder das Bestätigen des Kaufens.

Das Erfassungsgerät 8 kann derart zu bedienen sein, dass zunächst ein Gegenstand 2 erfasst wird. Für das Erfassen ist das Erfassungselement 9 vorgesehen. Nachdem das Erfassen erfolgt ist, gibt das Ausgabeelement 10 beispielsweise einen Begriff in einer Zeile wieder, der die Bezeichnung des Gegenstandes 2 sein kann. Sofern der Gegenstand 2 mittels der Technik noch nicht eindeutig identifiziert werden konnte, besteht beispielsweise die Möglichkeit, dass mehrere Begriffe oder Bezeichnungen in den Zeilen des Ausgabeelementes 10 sichtbar sind, wovon der Bediener die Zeile auswählt und markiert, die den Begriff zeigt, der den Gegenstand bezeichnet. Im Anschluss an diese Auswahl kann der Bediener von der Möglichkeit Gebrauch machen, eine Menge festzulegen zu diesem Gegenstand. Da es sich bei dem Gegenstand um einen solchen handelt, der zu kaufen oder zu erwerben ist, wird folglich die zu kaufende Menge erfasst. Dieser Bedienhandlung können sich weitere anschließen, die zum Erwerb des Gegenstandes führen, wie beispielsweise das Auslösen einer Bestellung von erfassten Gegenständen. Mit anderen Worten lässt sich so eine Art "Warenkorb" befüllen, der im Anschluss "zur Kasse" geschickt werden kann.

Es kann vorgesehen sein, dass das Ausgabeelement 10 auch zur Ausgabe von Ton und insbesondere zur Ausgabe von Sprache ausgebildet ist. Ferner kann ein Vibrationsgeber vorgesehen sein.

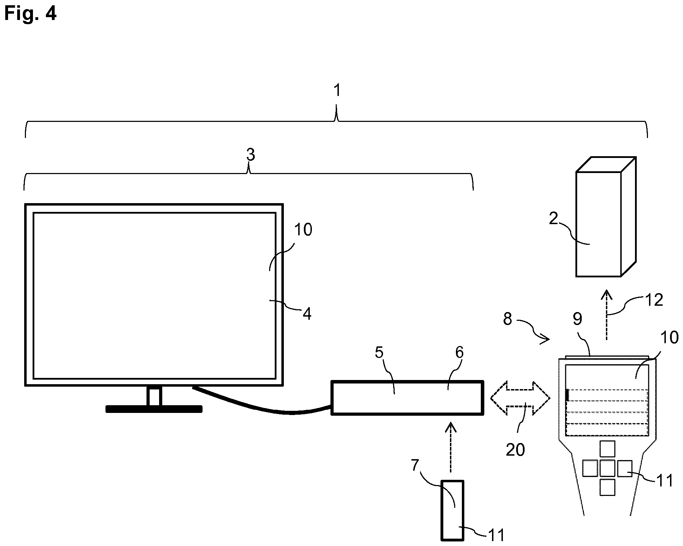

Anhand der **Fig. 4** wird ein Beispiel einer Anordnung 1 erklärt, in der das Erfassungsgerät 8 mit einer Empfangseinrichtung 3 mittels einer Verbindung 20 gekoppelt ist. Das Erfassungsgerät 8 weist -wie in den vorhergehenden Figuren- ein Erfassungselement 9, ein Ausgabeelement 10, sowie ein Bedienelement 11 auf. Ferner ist der Gegenstand 2 gezeigt, der von dem Erfassungselement 9 durch optisches Erfassen 12 identifiziert wird. Bei der Empfangseinrichtung 3 kann es sich um ein Empfangsgerät 5 mit einem Bildschirm 4 handeln. Selbige können getrennt voneinander ausgeführt sein -wie gezeigt- oder in einem einzigen Gerät, wie das bei einem TV-Gerät mit integriertem Empfänger der Fall ist. Unabhängig davon, ob das Empfangsgerät 5 separat aufgestellt oder in ein TV Gerät integriert ist, kann das Empfangsgerät 5 eine Datenverarbeitungseinheit 6 aufweisen. Bei einer solchen Datenverarbeitungseinheit 6 handelt es sich um eine Schaltungsanordnung mit Prozessor, Speicher und spezifischen Schaltkreisen Audio-/Video-Verarbeitung. Die Empfangseinrichtung 3 ist z.B. mittels einer Fernbedienung 7 bedienenbar.

Die Datenverarbeitungseinheit 6 ist ausgebildet, ein Betriebssystem zu betreiben sowie Software, die für das Betriebssystem vorgesehen ist. Die Datenverarbeitungseinheit 6 kann ferner Mittel zur Datenübertragung aufweisen. Damit besteht Möglichkeit, die Datenverarbeitungseinheit 6 mit dem Internet 30 zu koppeln sowie mit Geräten, zu denen die Datenverarbeitungseinheit eine drahtlose Verbindung 20 oder einen drahtgebundene bereitstellen kann. In der konkreten Ausgestaltung kann es sich bei einer drahtlosen Verbindung 20 um eine WLAN, DECT oder um eine vergleichbare Verbindung der sogenannten Nah-feld-Kommunikation (engl. NFC = near field communication) handeln.

Mit dem Beispiel soll ferner gezeigt werden, dass sowohl das Erfassungsgerät 8 das Ausgabeelement 10 und das Bedienelement 11 aufweisen kann als auch die Empfangseinrichtung 3. Bei Letzterem ist der Bildschirm 4 das Ausgabeelement 10 und die Fernbedienung 7 das Bedienelement 11. Damit kommt beispielsweise ein Erfassungsgerät 8 ohne Ausgabeelement und ohne Bedienelement in Betracht.

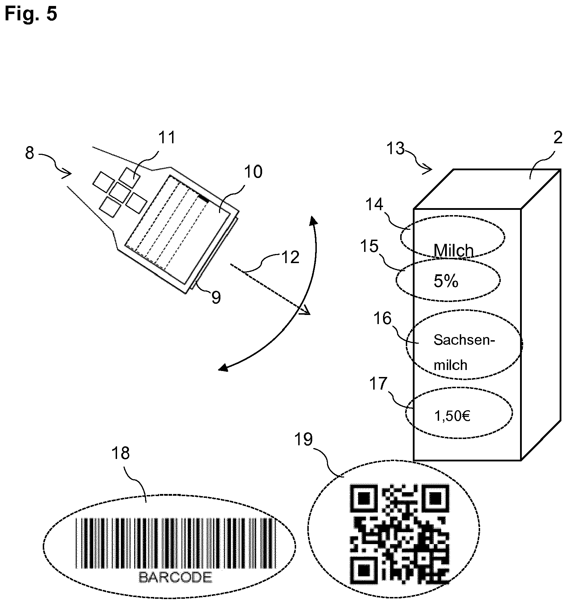

In der **Fig. 5** ist das Empfangsgerät 5 beim optischen Erfassen 12 gezeigt. Das Erfassungsgerät 8 weist in der bevorzugten Ausführungsform das Erfassungselement 9 auf. In dem gezeigten Beispiel umfasst das Erfassungsgerät 8 das Ausgabeelement 10 sowie das Bedienelement 11. Das optische Erfassen 12 dient dem Zweck, einen Gegenstand 2 zu identifizieren. Der Gegenstand 2 weist eine bestimmte Form/Farbe 13 auf. Gemeint ist damit, dass es sich um eine quaderförmliche Verpackung handeln kann oder eben auch um einen nur näherungsweise formbestimmten Gegenstand wie beispielsweise eine Gurke oder ein Brot.

Der Verpackung des Gegenstandes 2 lassen sich solche Informationen entnehmen, die teilweise maschinenlesbar sind. Gemeint sind Textzeichen, die mittels OCR erkannt werden können. Gemeint sind ferner sogenannte Balkencodierungen (engl. Barcode), die in den Varianten 1D und 2D bekannt sind und die in dem Beispiel als Barcode 1D 18 bzw. als Barcode 2D 19 gezeigt sind. Mittels des Barcode lässt sich normalerweise ein Gegenstand 2 eindeutig identifizieren. Bei den Textzeichen kann es sein, dass mehrere Informationen benötigt werden. Der in dem Beispiel gezeigte Gegenstand 2 weist eine Artikelbezeichnung 14, ein Artikelmerkmal 15, ein Herstellerbezeichnungen 16 sowie einen Preis 17 auf. Diesen Informationen lässt sich entnehmen, dass es sich um ein Pack mit 1 Liter Milch handelt, die 5 % Fett enthält, das 1,50 € kostet und das von der Firma Sachsenmilch hergestellt wurde. Die Summe der Informationen könnte ausreichend sein, um ein im Handel erhältliches adäquates Produkt ausfindig zu machen. Der gekrümmte Pfeil soll andeuten, dass das Erfassungsgerät 8 beim optischen Erfassen 12 bewegt werden kann, um die mehreren Informationen zu erheben. Ferner ist es möglich, den Gegenstand 2 in verschiedene Positionen gegenüber dem Erfassungsgerät 8 zu bringen. Wesentlich ist dabei die relative Position des Erfassungselementes 9 zu der Information auf dem Gegenstand 2.

Als Erfassungselement 9 lassen sich herkömmliche Barcode-Leser/-Scanner verwenden oder auch Komponenten einer Digitalkamera. Es kann vorgesehen sein, dass das Erfassungselement 9 eine digitale Bildinformation bereitstellt oder ein digitales Datenpaket. Letzteres kann beispielsweise die für den Barcode äquivalente Nummer enthalten oder den Textinhalt eines Schriftzuges.

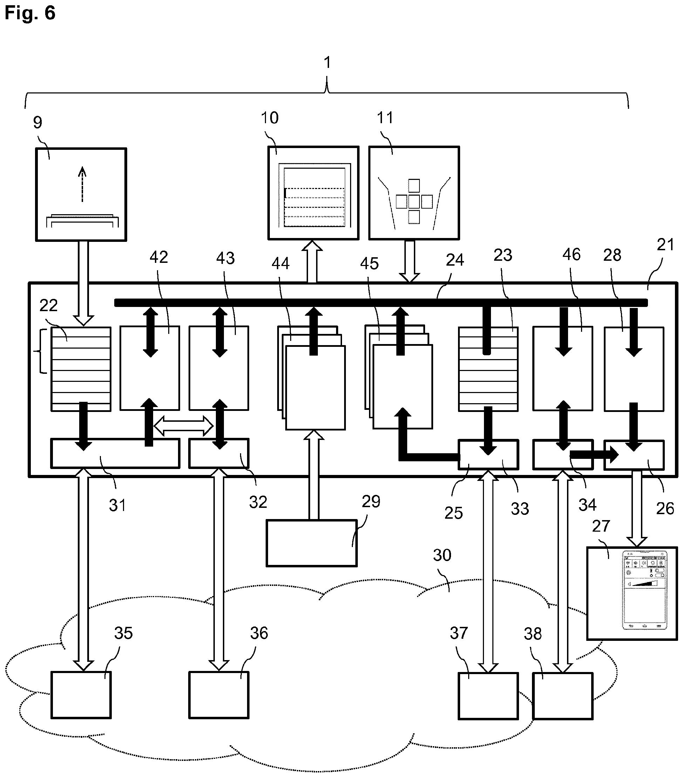

In der **Fig. 6** ist die Anordnung 1 in einer schematischen Darstellung (Blockdarstellung) gezeigt. Es soll verdeutlicht werden, wie die Bestandteile der Anordnung 1 zusammen wirken können. Die zentrale Rolle kommt einem Verarbeitungselement 21 zu. Das Verarbeitungselement 21 ist für mehrere verschiedene Verbindungen eingerichtet; beispielsweise für die Verbindung 20 mit dem Erfassungsgerät, wobei in dem Beispiel Verbindungen zu dem Erfassungselement 9, zu dem Ausgabeelement 10 sowie zu dem Bedienelement 11 hergestellt sind. Die Verbindung zu dem Erfassungselement 9 ist so gezeichnet, dass die ersten Informationen 22 zu einem Gegenstand 2 dem Verarbeitungselement 21 bereitgestellt werden, in nur einer Richtung. Dem Ausgabeelement 10 stellt das Verarbeitungselement 21 Daten bereit. Das Bedienelement 11 übergibt dem Verarbeitungselement 21 Daten zu den Bedienhandlungen.

In einem ersten Schritt geht es darum, die mindestens eine erste Information 22 durch ein oder mehrere Begriffe in Form von Daten zu ersetzen, um damit den Gegenstand 2 beschreiben zu können. Vorgesehen ist dafür das Verarbeitungselement 21, das eingerichtet ist eine erste Schnittstelle 31 zu verwenden, wobei die erste Schnittstelle 31 die mindestens eine erste Information 22 umwandelt in einen oder mehrere Begriffe, die den Gegenstand 2 kennzeichnen. Es kann vorgesehen sein, dass die erste Schnittstelle 31 derart eingerichtet ist, dass diese mit einer ersten Gegenstelle 35 im Internet 30 kommuniziert. Der Funktionsumfang der ersten Schnittstelle 31 kann derart erweitert sein, dass diese neben den besagten Begriffen, die hier als erste Daten verstanden werden, weitere Daten bereitstellt, die den Gegenstand näher beschreiben und/oder die für den Kauf des Gegenstandes obligatorisch sind. Gemeint sind damit Daten, die hier als zweite Daten verstanden werden. Solche, mit denen der Gegenstand ohne ergänzende Daten gekauft werden kann.

Sofern die erste Schnittstelle 31 die ersten Daten und gegebenenfalls die zweiten Daten bereitgestellt hat, kommen folgende Fälle in Betracht. Erstens, der Gegenstand 2 konnte nicht eindeutig identifiziert werden, oder zweitens, der Gegenstand 2 konnte nicht identifiziert werden. Für erstens ist vorgesehen, dem Bediener eine Auswahl anzubieten. Die zur Auswahl zur Verfügung gestellten ersten Daten sind in der zweiten Liste 42 enthalten. Eine dritte Liste 43 sowie die zweite Schnittstelle 32, die mit einer zweiten Gegenstelle 36 kommunizieren kann, sind dafür eingerichtet, dass im zweiten Fall ein Alternativangebot des Gegenstandes 2 bereitgestellt wird oder sofern es der Bediener als Option gewählt hat. D.h. mittels der zweiten Schnittstelle 32 ist es möglich, einen anderen Gegenstand, der mit dem Gegenstand 2 vergleichbar ist, ausfindig zu machen. D.h. es können tagesaktuelle Angebote bereitgestellt werden, die beispielsweise im Preis günstiger sind uvm.

Die vierte Liste 44 kann vorgesehen sein, ein statisches Produktangebot vorzuhalten, wie das beispielsweise bei einem herkömmlichen Katalog der Fall ist. Dieses mindestens eine Produktangebot kann über eine externe Datenquelle 29 (CD, SD, HDD usw.) dem Verarbeitungselement 21 bereitgestellt sein. Ferner ist es möglich, derartige Daten aus dem Internet 30 zu beziehen. Da solche Daten üblicherweise sehr umfangreich sind, kann es zweckmäßig sein, diese über Empfangsmittel für den linearen Medieninhalt zu beziehen. Gemeint ist, dass sich beispielsweise umfangreiche Datenmengen wie Softwareupdates und elektronische Programmzeitschriften auch über Satellit verteilen lassen, was sich gleichermaßen eignet, um mehrere Produktangebote auf eine Empfangseinrichtung 3 zu übertragen und in der vierten Liste 44 bereitzustellen. Mit der fünften Liste 45 kann die Möglichkeit geschaffen werden, dass ein vormals gekaufter Gegenstand 2 erneut zur Auswahl steht.

Die vorhergehend aufgezeigt mittels des Verarbeitungselements bereitgestellten Listen, nämlich die zweite Liste 42, die dritte Liste 43, die vierte Liste 44 sowie die fünfte Liste 45, sind eingerichtet erste Daten bereitzustellen, die in die ersten Liste 23 übernommen werden können. Dieses Übernehmen erfolgt durch den Bediener, indem dieser eine Auswahl tätigt. Die ersten Daten in der ersten Liste 23 können mit zweiten Daten, die zum automatischen Kauf erforderlich (obligatorisch) sind, verknüpft sein. Nach dem hiesigen Verständnis der ersten Liste 23, ist diese in einer einfachen Ausführungsform mit einem herkömmlichen Einkaufszettel vergleichbar. Es kann vorgesehen sein, dass eine solche Einkaufsliste als zusätzliche Liste 28 bereitgestellt wird und dass diese zusätzliche Liste 28 mittels des Übertragungselementes 26 auf ein zusätzliches Gerät 27 übertragen werden kann. Bei dem zusätzlichen Gerät kann es sich um ein Mobiltelefon, um einen Drucker, um ein Speicherelement und/oder um eine Datenverarbeitungseinheit eines Fahrzeuges handelt.

Das Verarbeitungselement 21 kann eine vierte Schnittstelle 34 aufweisen, die eingerichtet ist, den manuellen Kauf der Waren, die in der Einkaufsliste bzw. in der ersten Liste 23 stehen, derart zu planen, dass ein Routen- und Zeitplan bereitgestellt wird, anhand dem der Einkauf von einer Person durchgeführt werden kann. Hierfür weist das Verarbeitungselement 21 die vierte Schnittstelle 34 auf, die mit einer vierten Gegenstelle 38 im Internet 30 kommunizieren kann. Die vierte Schnittstelle 34 ist eingerichtet, zumindest erste Daten der ersten Liste 23 zu verwenden, wobei in der sechsten Liste 46 Daten enthalten sind, die mit den ersten Daten verknüpft sind und die eine Weg- und Zeit-Beschreibung enthalten können.

Die Datenkoppelung 24 ist eingerichtet um erste Daten und ggf. zweite Daten zwischen den Listen insbesondere mit der ersten Liste 23 auszutauschen und/oder zweite Daten oder zusätzliche Daten mit den ersten Daten in der ersten Liste 23 zu verknüpfen.

Vorteilhafterweise ist das Verarbeitungselement 21 mit einem Bestellelement 25 ausgestattet. Das Bestellelement 35 ist eingerichtet eine dritte Schnittstelle 33 zu verwenden. Die dritte Schnittstelle 33 kann eingerichtet sein zur Kommunikation mit einer dritten Gegenstelle 37, die gegebenenfalls im Internet 30 eingerichtet ist. Es ist vorgesehen, dass das Bestellelement 25 die erste Liste 23 abarbeitet, indem jeder Gegenstand, der in der ersten Liste 23 enthalten ist, automatisch gekauft wird. Erste Daten von Gegenständen, die gekauft wurden, können in der fünften Liste 45 erfasst sein.

Das Bestellelement 25 könnte in einer ersten Ausführung derart eingerichtet sein, dass es bei unterschiedlichen Anbietern/Verkäufern im Internet eine Ware (Gegenstand 2) bestellen kann. Möglicherweise ist ein solcher Ansatz technisch nicht flexibel genug, um auf regionale Angebote, auf sich ändernde Seiten der Händler, auf Softwarefehler und auf dergleichen angemessen durch angepasste Software zu reagieren. Mit Software ist die gemeint, die den Funktionsumfang des Bestellelementes 25 ausmacht. Es wird daher vorgeschlagen, dass das Bestellelement 25 mittels der dritten Schnittstelle 33 mit einer dritten Gegenstelle 37 kommuniziert, die einen weitestgehend konstanten Funktionsumfang aufweist. Mit anderen Worten könnte es sich bei der dritten Gegenstelle um eine Internetseite oder um ein vergleichbares Interface handeln, das abwärtskompatibel ist. D.h., dass bei funktionalen Erweiterungen der dritten Gegenstelle 37 ein Bestellelement 25 mit einer älteren Version als die dritte Gegenstelle 37 weiterhin funktionsfähig ist.

Ferner kommt in Betracht, dass die dritte Schnittstelle 37 eingerichtet ist, den Vorgang des Kaufens eines Gegenstandes bei unterschiedlichen Anbietern/Verkäufern im Internet zu tätigen. Damit ist es möglich, dass das bestellte Element 25 mit einem geringen Funktionsumfang ausgestattet ist, der zudem stabil funktionieren kann, während ein Server, der die dritte Gegenstelle 37 im Internet bereitstellt, mit einem höheren, deutlich flexibleren und stets aktualisierten Funktionsumfang ausgestattet ist. Insofern besteht die Möglichkeit, dass das Angebot hinsichtlich Bestellen und Kaufen bei verschiedenen Anbietern für den Bediener zunehmen kann, ohne dass in seiner lokalen Umgebung Aufwand entsteht hinsichtlich Rechenkapazität und Softwareanpassung (Updates).

Vorteile der Anordnung 1 sind darin zu sehen, dass beim Erfassen der zu kaufenden Gegenstände das menschliche Auge durch ein technisches Mittel ersetzt wird. Dieses technische Mittel stellt unter Zuhilfenahme des Erfassungselementes 9, des Verarbeitungselements 21 sowie der ersten Schnittstelle 31 und gegebenenfalls der ersten Gegenstelle 35 zu einer digitalisierten optischen Information solche Daten bereit, die eine weitere Verarbeitung ermöglichen. Ein Vorteil ist bereits darin zu sehen, dass sich eine Einkaufsliste 23 auf ein mobiles Gerät 27 übertragen lässt. Mit diesem Gerät 27 ist der Bediener in der Lage, die gewonnenen Informationen (Einkaufszettel/- liste) zu transportieren. Alternativ kann er die Liste auch ausdrucken.

Das dahinter stehende Konzept basiert darauf, dass ein zu kaufender Gegenstand 2 überwiegend dann erfasst wird, wenn er verbraucht wurde (alle ist). D.h. es ist gewollt, dass zu kaufende Gegenstände zunächst lediglich vorgemerkt werden. Insofern stellt die Einkaufsliste 23 ein Gedächtnis dar, das sich sind übertragener Weise die Dinge merkt, die verbraucht wurden. In Anbetracht einer Integration in eine Empfangseinrichtung 3 kann beispielsweise anstelle eines Programmplatzes die aktuelle Einkaufsliste abrufbar sein.

Ein solches System kann ferner in der Lage sein, aus einer Historie der ersten Liste 23 einen durchschnittlichen Verbrauch von Waren des täglichen Bedarfs zu bestimmen. Unter Zuhilfenahme dieses durchschnittlichen Verbrauches kann vorgeschlagen werden, was und welche Mengen davon demnächst einzukaufen sind. Bei derartigen Vorschlägen kann das System ein Mindesthaltbarkeitsdatum berücksichtigen. Ferner ist denkbar, dass das System Ereignisse in der Zukunft berücksichtigt, wie beispielsweise kalendarisch bedingte Ereignisse wie z.B. Feiertage. Der Vorschlag könnte derart angelegt sein, dass der durchschnittliche oder ein überdurchschnittlicher Verbrauch auch während dieser Ereignisse durch einen Vorrat ausreichend gedeckt ist.

Anknüpfend an den Vorteil der mit technischen Mitteln gewonnenen Daten zum Einkaufen lassen sich diese Daten zweckmäßigerweise auch für einen automatischen Kauf weiterverwenden. Sofern der Bediener von dieser Möglichkeit absieht, kann ihm ein Vorteil damit geboten werden, dass sein Einkauf so gut wie möglich geplant wird.

Gemäß einer Ausführungsform der Anordnung weist die Anordnung ein Planungselement auf, wobei das Planungselement derart eingerichtet ist, dass es mittels einer vierten Schnittstelle erste Daten und zweite Daten an eine vierte Gegenstelle, die im Internet eingerichtet ist, überträgt und die vierte Gegenstelle Plandaten bereitstellt. Die Plandaten sind zur Planung einer Tour eines Einkaufes vorgesehen sind und die Plandaten weisen Wegkoordinaten, Zeitangaben und Einkauflisten zzgl. Preisinformation auf. Die Plandaten sind ferner vorgesehen zur Planung bezüglich der zur Verfügung stehenden Verkehrsmittel und bezüglich der aktuellen Verkehrssituation. Die Plandaten können Inhalte mit einem regionalen Bezug bezüglich der Händler und dem Verkehrsnetz aufweisen. Die Plandaten können solche Inhalte aufweisen, die eine nach mindestens einem Kriterium optimierte Planung bereitstellen, wobei das Kriterium der Preis der zu kaufenden Gegenstände, der Weg für die Tour oder die Zeit für die Tour ist.

Ein zusätzliches Gerät 27 kann eingerichtet sein, die Schnittstellen 31, 32, 33 und/oder 34 zu verwenden sowie die jeweils korrespondierenden
Gegenstellen 35, 36, 37 und 38. Ferner kann das zusätzliche Gerät 27 das Verarbeitungselement 21 in Gänze aufweisen. Wesentliche Teile des Verarbeitungselementes 21 können mit Mitteln der Programmierung (Software) realisiert sein. Derartiges bietet sich für eine Datenverarbeitungseinheit 6 eines Empfangsgerätes 5 an, sofern das darin verwendete Betriebssystem zudem in zusätzlichen Geräten 27 zu Anwendung kommt (z.B. Android).

Bei der Ausgestaltung des Erfassungsgerätes 8 kommt es auf eine handliche und komfortable Bedienung an. Eine drahtlose Verbindung 20 kann gleichermaßen von Vorteil sein wie eine drahtgebundene. Im Fall einer drahtlosen Lösung kann ein autonome Energieversorgung (z.B. Akku) eingerichtet sein, die mittels einer Ladestation aufladbar ist. Die Ausgabe von Ton, Sprache oder Vibration bietet sich an, um Bedienhandlungen eines Bedieners zu unterstützen. Zweifelsohne kommt der Bedienerführung mittels der Anzeige 10 eine wesentliche Bedeutung zu (Menüs usw.). Das Ausgabeelement 10 sowie das Bedienelement 11 können mittels einer Berühranzeige (engl. touch screen) bereitgestellt sein.

Der Gegenstand der ersten Daten und der zweiten Daten soll nachfolgend anhand eines Beispiels erläutert werden. Die ersten Daten weisen mindestens einen Begriff auf wie Milch, Gurke, Brot usw. Die zweiten Daten sind als eine Ergänzung der ersten Daten zu verstehen und sind für das automatische Kaufen vorgesehen. Es ist nun eine Frage der Ausgestaltung der dritten Schnittstelle, welchen Inhalt die zweiten Daten aufweisen müssen. Sofern die dritte Gegenstelle 37 bereits in der Lage ist, die Weisung "... für Kunde A einen Pack Milch kaufen" zu verarbeiten, kommt es auf die Stückzahl an und darauf, wer der Käufer ist (Kunde A). Das System könnte den geeigneten Verkäufer selbst ausfindig machen. Die ersten Daten sind vorgesehen, eine (ggf. sehr einfache) Einkaufsliste zu erstellen. Zu dem Begriff des zu kaufenden Gegenstandes 2 gehört mithin auch die Anzahl (Stückzahl, Menge). Sofern sich der Bediener mit einem umfangreichen Produktsortiment befasst hat und sein Kaufwunsch auf ein ganz spezielles Produkt ausgerichtet ist, sind die zweiten Daten umfangreicher. In dem beschriebenen Beispiel ist der Kunde bereits aus Gründen der Bezahlung dem System bekannt, wobei mindestens eine Adresse bekannt ist (Lieferadresse).

Bezüglich der Gegenstellen 35, 36, 37 und 38 kommen Lösungen in Betracht, die jeweils auf einem Server bereitgestellt sind. In einer ersten Ausführungsform kann sich der Sever ausschließlich seiner lokalen Daten (Datenbank) bedienen. Selbiger kann in einer weiteren Ausführungsform andere Server mit einbeziehen.

Die erste Gegenstelle 35 kann so eingerichtet sein, dass diese mit Suchbegriffen und/oder Artikelnummern arbeitet. Etwas komplexer sieht es bei der Erkennung von Gegenständen 2 anhand eines Bildes (erste Information) aus, das überwiegend von Form/Farbe 13 geprägt ist. Es kann sein, dass eine Konturenerkennung eingerichtet ist sowie eine Farbeerkennung, sodass beispielweise einfache Gemüse sowie Backwaren erkannt werden können. Es lassen sich sog. Suchmaschinen (Google) verwenden.

**Bezugszeichenliste**

| | | |
|---|---|---|
| 1 | Anordnung | |
| 2 | Gegenstand | (Ware) |
| 3 | Empfangseinrichtung | |
| 4 | Bildschirm | (TV) |
| 5 | Empfangsgerät | (STB) |
| 6 | Datenverarbeitungseinheit | |
| 7 | Fernbedienung | |
| 8 | Erfassungsgerät | |
| 9 | Erfassungselement | |
| 10 | Ausgabeelement | |
| 11 | Bedienelement | |
| 12 | optisches Erfassen | |
| 13 | Form/Farbe | (Bild) |
| 14 | Artikelbezeichnung | (Bild) |
| 15 | Artikelmerkmal | (Bild) |
| 16 | Hersteller | (Bild) |
| 17 | Preis | (Bild) |
| 18 | Barcode 1D | |
| 19 | Barcode 2D | |
| 20 | Verbindung | (drahtgebunden oder drahtlos) |
| 21 | Verarbeitungselement | |
| 22 | erste Information | (zum Gegenstand) |
| 23 | erste Liste | |
| 24 | Datenkopplung | (zur ersten Liste) |
| 25 | Bestellelement | |
| 26 | Übertragungselement | |
| 27 | zusätzliches Gerät | |
| 28 | zusätzliche Liste | |
| 29 | Datenquelle | (externe statische) |
| 30 | Internet | |
| 31 | erste Schnittstelle | (Erkennung) |
| 32 | zweite Schnittstelle | (Vorschläge) |
| 33 | dritte Schnittstelle | (Kauf) |
| 34 | vierte Schnittstelle | (Tour) |
| 35 | erste Gegenstelle | |
| 36 | zweite Gegenstelle | |
| 37 | dritte Gegenstelle | |
| 38 | vierte Gegenstelle | |
| | | |
| 42 | zweite Liste | (Ergebnis der Gegenstandserkennung) |
| 43 | dritte Liste | (dynamische Angebote) |
| 44 | vierte Liste | (statische Angebote) |
| 45 | fünfte Liste | (vormalige Einkäufe) |
| 46 | sechste Liste | (Tourdaten) |

## Patentansprüche

1. Anordnung (1) zum Unterstützen von Einkäufen aufweisend
ein Bedienelement (11) zum Erfassen von Bedienhandlungen,
ein Ausgabeelement (10) zum Ausgeben von Bild,
ein Erfassungselement (9) zum Erfassen (12) mindestens einer ersten Information (22) zu mindestens einem zu kaufenden Gegenstand (2),
ein Verarbeitungselement (21) zum Verarbeiten der mindestens einen ersten Information (22) und zum Bereitstellen von ersten Daten zu der ersten Information (22) des mindestens einen zu kaufenden Gegenstandes (2) in einer ersten Liste (23),
wobei mit dem Verarbeitungselement (21) das Bedienelement (11), das Ausgabeelement (10) und das Erfassungselement (9) gekoppelt sind,
wobei die ersten Daten in der ersten Liste (23) eine Bezeichnung (14) des Gegenstandes (2) aufweisen und mit einer zu kaufenden Menge oder Stückzahl des Gegenstandes (2) verknüpft sind,
wobei die Anordnung (1) zum Kaufen des mindestens einen Gegenstandes (2) ferner ein Übertragungselement (26) und/oder ein Bestellelement (25) aufweist,
wobei das Übertragungselement (26) eingerichtet ist zum Koppeln mit einem zusätzlichen Gerät (17) und zum Übertragen der ersten Liste (23) oder einer zusätzlichen Liste (28), die ersten Daten aufweist, an das zusätzliche Gerät (27),
wobei das Bestellelement (15) eingerichtet ist zum Koppeln mit dem Internet (30) und eingerichtet ist, den mindestens einen Kauf mit einer Bestellung bei mindestens einem Verkäufer im Internet (30) automatisch durchzuführen mittels der ersten Liste (23).

2. Anordnung gemäß Anspruch 1,
wobei das Verarbeitungselement (21) mittels einer Datenverarbeitungseinheit (6) einer Empfangseinrichtung (3) eingerichtet ist,
wobei die Empfangseinrichtung (3) zum Empfangen von linearen Medieninhalten, zum Ausgeben von Bild und Ton sowie zum Bedienen mit einer Fernbedienung (7) eingerichtet ist.

3. Anordnung gemäß Anspruch 1 oder 2,
wobei die erste Information (22) ein Bild des Gegenstandes (2) oder ein Bild (13) von dessen Verpackung ist oder
die erste Information ein Bild, eine maschinenlesbare Information oder ein Bild von der maschinenlesbaren Information ist, die die Verpackung des Gegenstandes aufweist, wie beispielsweise ein Barcode (18,19), ein Schriftzug (14,15,16), eine Marke, ein Preis (17) und/oder eine Artikelnummer,
wobei das Erfassungselement (9) eingerichtet ist, den Barcode (18,19) zu erkennen und eine adäquate erste Information (22) als Datenpaket zu erzeugen, und/oder das Erfassungselement (9) eingerichtet ist, die erste Information (22) als digitale Bilddaten (14,15,16,17,18) mittels einer Kamera zu erzeugen.

4. Anordnung gemäß einem der Ansprüche 1 bis 3,
wobei das Erfassungselement (9) in einem handlichen Erfassungsgerät (8) eingerichtet ist,
wobei das Bedienelement (11) und das Ausgabeelement (10), entweder die der Empfangseinrichtung (3) sind, nämlich Fernbedienung (7) und Bildschirm (4), oder das Bedienelement (11) und das Ausgabeelement (10) zusammen mit dem Erfassungselement (9) in dem Erfassungsgerät (8) eingerichtet sind.

5. Anordnung gemäß einem der Ansprüche 1 bis 4,
wobei zum Koppeln des Erfassungselementes (9) mit dem Verarbeitungselement (21) eine drahtgebundene oder drahtlose Verbindung (20) eingerichtet ist, insbesondere zwischen dem Erfassungsgerät (8) und der Empfangseinrichtung (3).

6. Anordnung gemäß einem der Ansprüche 1 bis 5,
wobei das Verarbeitungselement (21) oder die Empfangseinrichtung (3) eingerichtet ist, als Zentrale eine Haussteuerung zu fungieren,
wobei eingerichtet ist, dass das Erfassungselement (9) und/oder das Erfassungsgerät (8) als Teilnehmer der Haussteuerung fungieren.

7. Anordnung gemäß einem der Ansprüche 1 bis 6,
wobei das Verarbeitungselement (21) eingerichtet ist, erste Daten bereitzustellen, die den Gegenstand (2) bezeichnen und/oder beschreiben, und zweite Daten bereitzustellen mit Inhalten, die für den automatischen Kauf des Gegenstandes obligatorisch sind,
wobei zweite Daten des Gegenstandes (2) mit ersten Daten des Gegenstandes verknüpft sind.

8. Anordnung gemäß einem der Ansprüche 1 bis 7,
wobei das Verarbeitungselement (21) zum Erkennen des Gegenstandes (2) eingerichtet ist, mittels einer ersten Schnittstelle (31) die ersten Daten bereitzustellen,
wobei die erste Schnittstelle (31) eingerichtet ist, zu der mindestens einen ersten Information (22) die ersten Daten des Gegenstandes (2) bereitzustellen.

9. Anordnung gemäß einem der Ansprüche 1 bis 8,
wobei die erste Schnittstelle (31) eingerichtet ist, zu der mindestens einen ersten Information (22) die ersten Daten und die zweiten Daten des Gegenstandes (2) bereitzustellen.

10. Anordnung gemäß einem der Ansprüche 1 bis 9,
wobei das Bestellelement (25) eingerichtet ist, den Kauf durchzuführen mittels der ersten Daten und der zweiten Daten des Gegenstandes (2).

11. Anordnung gemäß einem der Ansprüche 1 bis 10,
wobei eine zweite Schnittstelle (32) und/oder mindestens eine Liste (23,42,43,44,45,46) eingerichtet sind, zweite Daten zu dem Gegenstand (2) oder zu mindestens einen anderen Gegenstand bereitzustellen.

12. Anordnung gemäß einem der Ansprüche 1 bis 11,
wobei das Verarbeitungselement (21) zum Auswählen des Gegenstandes (2) und zum Auswählen mindestens eines anderen Gegenstandes eingerichtet ist,
wobei das Auswählen eingerichtet ist, die jeweiligen zweiten Daten in die erste Liste (23) zu übernehmen.

13. Anordnung gemäß einem der Ansprüche 1 bis 12,
wobei das Bestellelement (25) eingerichtet ist, den jeweiligen Gegenstand mittels einer dritten Schnittstelle (33) im Internet (30) zu kaufen.

14. Anordnung gemäß einem der Ansprüche 1 bis 13,
wobei das Verarbeitungselement (21) eingerichtet ist, die ersten Daten aus einer mittels der Empfangseinrichtung (3) und/oder des Verarbeitungselementes (21) bereitgestellten Liste (42,43,44,45) in die erste Liste (23) zu übernehmen.

15. Erfassungsgerät (8) ausgebildet zum Verwenden in der Anordnung (1) gemäß einem der vorhergehenden Ansprüche.
